# EUROPEAN PATENT APPLICATION

(11) **EP 1 475 502 A1**
(43) Date of publication of application: **10.11.2004**
(21) Application number: 03425294.0
(22) Date of filing: 07.05.2003
(51) Int. Cl.: E05F 15/00, G05B 19/4061

(54) **Safety device for automatic entry systems**

(71) Applicant: Rib S.r.l., 25014 Castenedolo (Brescia) (IT)
(72) Inventor: Bosio, Giorgio, 25014 Castenedolo (Brescia) (IT)
(74) Representative: Sangiacomo, Fulvia

(57) **Abstract**

The invention concerns a safety device for power operated closing systems, such as industrial, commercial, garage, gate electromechanical systems and similar, where the closing system has at least one moving part driven by an electric motor using mains supply voltage and frequency current, governed by an electronic control panel. As a safety measure, the device makes us of an encoder or an encoder and inverter in combination, to generate signals to the electronic panel indicating the position and speed of the moving part so as to control and limit the dynamic or impact force of the latter on encountering an obstacle during its travel.

## Description

### Field of Invention

The present invention concerns in general, the filed of the power operated closing systems and refers in particular to safety devices against impact, applicable on gates, both on leaf and sliding doors, operated by pistons, actuator arms or motor reduction units, electromechanical barriers, rolling shutter and similar closing systems. State of the Techniques.

Every power operated closing system of the abovementioned type has at least one moving part having its own weight and a moving speed, which generate a dynamic force or impact against any obstacle which happens to be in its closing route.

Now, new safety regulations, such as EN 12453 and EN 12445 respectively for the use and testing of power operated closing systems such as those for industrial and business purposes, and for garages and gates, enforce the need to limit the level and duration of the dynamic or impact forces, and residual static forces, those immediately following impact of the power assisted closing system against an obstacle.

At present, the most used power operated closing installations do not have any contact with obstacle sensitive devices. Consequently, the power operated closing system generally continues to push against the obstacle for an unlimited length of time, not ensuring the removal of the residual forces within the required times. At the most, the safety function, which in practice means an interruption in the closing force and/or in the inversion of direction of the same, is today managed above all through the action of sensitive edges or absorption sensors of the motor current.

The sensitive edges can be through pneumatic, mechanical, contact photoelectric cell location or others. They send a signal to an impact governing electric board which as a result causes the interruption of the motor thrust and/or inversion of movement.

The current absorption sensors that can be incorporated in the electronic control board, read the current absorption by the electric motor, which, in the presence of an obstacle, increases. They are more sensitive and are normally used when a motor is the low voltage, direct current type. However they have problems of reliability in that the reading of any abnormal increases in the current can be the consequence of variations in friction in the closing movement due to changes in weather, wear on the ratio motor or the closing system itself, etc. Furthermore, the solution to apply them to motors fed by the normal mains voltage is difficult to apply.

In a previous patent for utility model of the same applicant, the use of an encoder working in association with the output shaft of the electric motor of a powered arm controlling leaf gates and similar systems was put forward, as a safety measure using an economic and reliable solution. However, the sole function of said encoder was to govern the number of revs per time unit.

The dynamic or impact forces do not depend on the power of the drive electric motor but, as mentioned above, on the weight and moving speed of the closing system. These two factors represent a limit which is difficult to overcome, for example, in the case of automatic straight, sliding gates, because of the typical weight of this type of gate and its moving speed. In fact, the weight of the gate is almost always an irresolvable limit for the installer, therefore the control of its moving speed becomes critical. This speed however cannot be reduced while moving, otherwise the closing/opening times would become too long and unacceptable for the user. The speed should be reduced only during the final movement section of the gate, the section where impact levels are higher and where the new regulations require these levels to be tested and more demanding limits enforced.

Therefore, the speed may be varied during movement taking into consideration the position of the gate or power operated closing system.

When the automatisms are fed by dc current (usually 12V or 24V), control of the speed is simple and economic, thanks to a simple control of the voltage of the motor, which in the case of ac current motors using either 230V or 400V has no influence on the speed, but mainly on the thrust or torque force.

DC current motors have problems of reliability and this has limited their acceptance on the part of the market, so much so that the automatic closing systems are mainly equipped with 230V ac mono-phase or 400V ac three phase asynchronous motors. For the same reasons dc motors for medium to large size gates are uncommon.

Variations in speed of an automatic sliding gate with ac current motor requires an inverter which adjusts the frequency of the motor and interrogates the drive controller to find out the position of the gate and to know when to intervene. However, this solution appears to be very costly, unacceptable and difficult to install so as to enable the inverter to read the position of the gate, Furthermore, the available inverters are usually designed for three phase motors and not for single phase motors, the type mainly used for the power operated closing systems in question.

Furthermore, alternative technical solutions for slowing down ac motors, such as feed sectioning using power transistors, do not seem reliable in particular, when the objective is the realisation of a control and governing group of a unit, suitable for several types of motor, in that the current peaks during fibrillation of the electronic component could cause burning out of the transistor itself.

Hence, the techniques available to the sector at present do not offer acceptable, economic conditions to guarantee safety of a power operated closing system, in particular on medium to large sized automatic sliding gates, with a speed reduction towards the end of its stroke and a decrease in the impact force.

### Objects and Summary of the Invention

One object of the invention is to propose control and command devices for power operated closing systems which totally fulfil the abovementioned safety regulations.

Another object of the invention is to resolve the problems outlined above connected with command and control of power operated closing systems such as, gates, electromechanical barriers and rolling shutters, by using economic, reliable control devices, suited to the various different systems, irrespective of the motor used and weight of the moving part.

A further object of the invention is to supply safety devices which operate using normal voltage and frequency electric current and which can therefore be used universally to govern different types of motor and consequently all types of gates, barriers or power operated shutters.

These objects and the resulting advantages are achieved, in compliance with this invention using a device according to at least claim 1.

The invention therefore envisages the use of an electronic control board including a microprocessor to govern a specific power operated closing system in combination with:
- an encoder, to generate signals indicating the speed of a moving part and to establish a stop or inversion of said part, in the case of contact with an obstacle, so as to limit the forces on the latter;
- an inverter to optimise the speed of the moving part, the maximum possible impact forces in the various positions, together with the weight of the gate, meet the practical requirements of the end user;
- an encoder and an inverter working in combination to achieve together the advantages of an encoder and an inverter and, should it be the case, to take advantage of the speed information and/or position of the moving part achieved through the use of the encoder, with the aim of obtaining a more precise and safe management of the inverter.

### Brief description of the Drawings.

Further details of the invention will become more evident in the continuation of this description made in reference to the enclosed, indicative and non-limiting drawings, in which:
Fig. 1 shows a block and flow diagram of a safety device which uses an encoder;
Fig. 2 shows an analogous block and flow diagram of a safety device which includes an inverter; and
Fig. 3 shows a further block and flow diagram of a safety device which includes an encoder and inverter working in combination.

In said drawings, the dotted flow lines represent the electric input lines and the continuous ones the information lines between the blocks shown.

### Detailed Description of the Invention

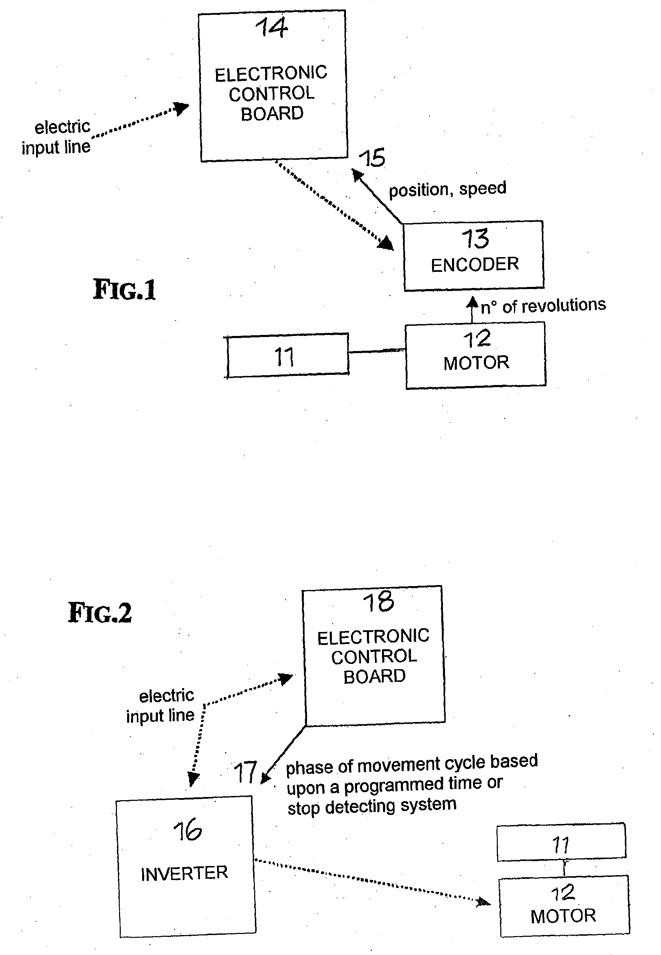

In Fig. 1, 11 indicates the moving part of a power operated closing system such as for example a gate, driven by a typical ac current and mains voltage electric motor 12. The motor 12 is connected to an encoder 13 fed electrically by an electronic control board 14 which it communicates with along a signals line 15. The electronic control board 14 includes a master card, that is to say, a microprocessor to receive and elaborate the signals arriving from the encoder. The latter can be optical, magnetic or another type of encoder. It is provided and used to collect the number of motor revs and consequently the travelling speed of the moving part of the closing system. If the progression of this moving part is intercepted or interrupted by an obstacle, the number of readings or impulses sent by the encoder within the time unit decreases and they are used as signals sent to the electronic board to govern the system according to needs.

In Fig. 2 the automated closing system 11, that is to say a gate or a similar system, is driven by a motor 12 fed electrically through an inverter 16. The latter connects up to and communicates, using a signals line 17, with a master card or microprocessor in an electronic control board 18 of the system. The inverter 16 is provided and used to receive the information necessary to govern the speed of the moving part of the closing system during its travel and depending on its position. It will be fed by current at the frequency and voltage of the mains supply, for example 230V, and will be advantageously set to calibrate a high speed torque, a low speed torque and a final end of travel approach adjustment speed.

In this way the inverter, in compliance with the regulations, is able to control and limit, thanks to the control of the torque and speed, the thrust of the moving part of the closing system against any obstacle it meets along its travel, in any case at a set distance from the end of travel.

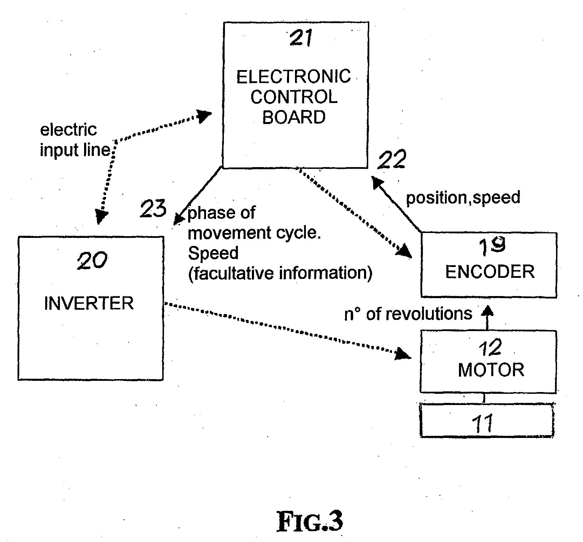

In the embodiment in Fig. 3, both an encoder 19 and an inverter 20, in communication with a master card or microprocessor in a control board 21 using the respective signal lines 22,23 are provided and connected to a drive motor 12 for the moving part 11 of an automated closing system.

Also in this case the encoder can be optical, magnetic or another type. It sends signals indicating the speed and/or position of the moving part of the closing system, signals which can be collected and elaborated by the master card or microprocessor to transmit the necessary information to the inverter in order to control the speed of the moving part during its travel.

## Claims

1. A safety device for power operated closing systems, such as industrial, commercial, garage, gate electromechanical systems and similar, where the closing system has at least one moving part driven by an electric motor using mains supply voltage and frequency current, governed by an electronic control board, **characterised in that** it comprises an encoder working in conjunction with said motor, communicating with a master card or microprocessor in said electronic panel and set up to read the number of revs of the motor and at the same time the position and travel speed of the moving part of the closing system, said encoder sending signals to the electronic panel indicating the position and speed of said moving part so as to control and limit the dynamic or impact force of the latter against any obstacle interfering with its movement, the encoder being optical, magnetic or of some other type.

2. A safety device for power operated closing systems, such as industrial, commercial, garage, gate electromechanical systems and similar, where the closing system has at least one moving part driven by an electric motor whose voltage and frequency current is supplied by an inverter, governed by an electronic control board, **characterised in that** it comprises an inverter working in conjunction with said motor, communicating with a master card or microprocessor in said electronic panel and calibrated to control the position of the moving part, through a variation in torque (tension) of the motor and speed (frequency) at least on nearing the end of travel of the moving part, so as to limit the dynamic or impact force of said moving part against any obstacle interfering with its movement in the major danger zones described in the safety regulations for automatic closing systems in force.

3. A safety device for power operated closing systems, such as industrial, commercial, garage, gate electromechanical systems and similar, where the closing system has at least one moving part driven by an electric motor using mains supply voltage and frequency current, governed by an electronic control board, **characterised in that** it comprises an encoder and an inverter working in conjunction with said motor, communicating with a master card or microprocessor in said electronic panel using respective signal lines, and by the fact that the encoder is set up to read the number of revs of the motor and at the same time the position and/or travelling speed of the moving part of the closing system, sending signals to the electronic board indicating said position and/or speed and by the fact that the inverter governs the speed of said moving part along throughout it travel in reply to the information arriving from the electronic board, so as to limit the dynamic or impact force of said moving part against any obstacle interfering with its movement in the major danger zones described in the safety regulations for automatic closing systems in force.

4. A device according either to claim 2 or 3, wherein said inverter is provided for motors fed by single phase or three phase current to adjust at least the motor torque at high speed, the motor torque at low speed, and a final end of travel approach adjustment speed.

5. The use of an encoder working in conjunction with a drive motor of a moving part of a power operated closing system and with an electronic control panel to detect the position and speed, or only the travel speed, of this moving part and to limit the thrust force (also known as residual force) of the latter on encountering an obstacle.

6. The use of an inverter working in conjunction with a drive motor of a moving part of a power operated closing system and with an electronic control panel to govern the speed of said moving part during its travel and to limit its dynamic or impact force on encountering an obstacle.

7. The combined use of an encoder and inverter connected, both to a drive motor of a moving part of a power operated closing system and to an electronic control panel, to detect the position and govern the speed of said moving part, or simply to govern the speed, limiting its dynamic or impact force on encountering an obstacle and the duration of the residual or thrust force.

8. The use of an encoder as a safety means against impacts, at least for barriers, leaf gates and shutters.

9. The use of an inverter as a safety means against impacts at least for leaf gates, horizontal sliding gates and roller shutters.

10. The combined use of an encoder and inverter as safety means against impact at least for barriers, leaf gates, horizontal sliding gates and roller shutters.
